(19) Europäisches Patentamt
European Patent Office
Office européen des brevets

(11) **EP 3 364 162 A1**

(12) **EUROPEAN PATENT APPLICATION**

(43) Date of publication:
**22.08.2018 Bulletin 2018/34**

(51) Int Cl.:
***G01L 3/00*** *(2006.01)*          *B82Y 15/00* *(2011.01)*
*B82Y 20/00* *(2011.01)*          *G01L 11/02* *(2006.01)*

(21) Application number: **17157211.8**

(22) Date of filing: **21.02.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **University of Vienna
1010 Vienna (AT)**

(72) Inventors:
• **MILLEN, James
1080 Vienna (AT)**

• **KUHN, Stefan
1180 Vienna (AT)**
• **ARNDT, Markus
1090 Vienna (AT)**
• **STICKLER, Benjamin
47051 Duisburg (DE)**
• **HORNBERGER, Klaus
45481 Mulheim an der Ruhr (DE)**

(74) Representative: **J A Kemp
14 South Square
Gray's Inn
London WC1R 5JJ (GB)**

(54) **METHOD OF SENSING AND SENSING APPARATUS**

(57)      Methods and apparatus for sensing are disclosed. In one disclosed arrangement an object is optically levitated in a light field. The polarization of the light field is modulated such that the polarization varies periodically at a driving frequency. The polarization couples to a non-spherically symmetric polarizability of the object in such a way as to cause the object to rotate in the light field at a rotation frequency that is equal to a rational fraction of the driving frequency. A phase of the rotation of the object relative to the modulation of the polarization is measured in order to detect an external torque or external force applied to the rotating object, thereby sensing a property of the environment of the rotating object.

Fig.1

EP 3 364 162 A1

**Description**

The invention relates to sensing properties of an environment, particularly a gaseous environment, by measuring small torques or forces applied to an optically levitated nanoscale object.

Nanoscale mechanical oscillators are sensitive to a wide range of forces, and are the subject of studies into fundamental quantum physics. They can be used for mass detection at the single proton level, position measurements to the quantum limit, and they have found application in genetics, proteomics, microbiology and studies of DNA. Devices with mechanical quality factors $Q_m \simeq 10^8$ have been realised, for example as described in 1) Norte, R. A., Moura, J. P., Groblacher, S., "Mechanical Resonators for Quantum Optomechanics Experiments at Room Temperature." Phys. Rev Lett. 116, 147202 (2016); and 2) Tsaturyan, Y, Barg, A., Polzik, E. S. and Schliesser, A., "Ultra-coherent nanomechanical resonators via soft clamping and dissipation dilution." arXiv:1608.00937 (2016). Many systems can be improved by parametrically driving the oscillator, as disclosed for example in 1) Hossein-Zadeh,M. and Vahala, K. J., "Observation of injection locking in an optomechanical rf oscillator." Appl. Phys. Lett. 93, 191115 (2008); and 2) Villanueva, L. G. et al., "A Nanoscale Parametric Feedback Oscillator." Nano Lett. 11, 50545059 (2011). Performance is, however, eventually limited by environmental dissipation through material stresses.

A known method to decrease coupling to the environment is to levitate a micro or nano-particle in an external field in vacuum, as described for example in Kuhn, S. et al., "Full Rotational Control of Levitated Silicon Nanorods." arXiv:1608.07315 (2016). Here, the performance is only limited by laser power fluctuations and collisional damping by residual gas particles, allowing high sensitivities to be realised. In such levitated systems, $Q_m$ of $10^8$ have been measured, allowing force sensing at the zepto-Newton level.

It is an object of the invention to provide methods and apparatus that allow even greater sensitivities to be achieved and/or that widen the range of situations in which sensitive measurements can be made, including for example at atmospheric pressures or low/soft vacuum levels.

According to an aspect of the invention, there is provided a method of sensing, comprising: optically levitating an object in a light field; modulating the polarization of the light field such that the polarization varies periodically at a driving frequency, wherein the polarization couples to a non-spherically symmetric polarizability of the object in such a way as to cause the object to rotate in the light field at a rotation frequency that is equal to a rational fraction of the driving frequency; and measuring a phase of the rotation of the object relative to the modulation of the polarization to detect an external torque or external force applied to the rotating object, thereby sensing a property of the environment of the rotating object.

Thus a method is provided in which an optically levitated object is made to rotate at a frequency that is dependent on the driving frequency of an applied modulation of polarization. In contrast to where rotation is caused by constant circularly polarized radiation, the rotation frequency is independent of pressure and laser power fluctuations. The stability of the rotation becomes close to that of the drive (providing the modulation of the polarization). This allows ultra-high $Q_m$ rotations to be achieved. The mean rotation frequency $f_r$ becomes independent of pressure or laser power fluctuations. The limitations of collisional damping and even the necessity to work in ultra high vacuum, are thereby overcome. While operating at room temperature, and gas pressures of a few millibar, embodiments have been shown to exhibit an effective $Q_m$ of $10^{11}$, and a $Q_m$ frequency product of $10^{17}$ Hz, three orders of magnitude greater than measured in any other experiment to the inventors' knowledge. This frequency stability has been shown by the inventors to yield an unprecedentedly high room temperature torque sensitivity of 0.24zNm and a relative pressure sensitivity of 0.3 %. In addition, the control of rotational frequency providing by the external driving of modulation makes it possible to tune the rotational frequency by almost $10^{12}$ linewidths. This feature makes the approach highly attractive for local force sensing, since in general a high $Q_m$ naturally comes with the cost of a low bandwidth. Measuring the phase lag rather than the frequency shift allows us to monitor force variations in real time. It is thus possible to circumvent a major limitation of typical alternative high $Q_m$ force sensors, whose measurement time grows inherently with $Q_m$.

According to an alternative aspect, there is provided a sensing apparatus, comprising: a light field generation unit configured to generate a light field suitable for levitating an object; a polarization modulator configured to modulate the polarization of the light field such that the polarization varies periodically at a driving frequency, wherein the polarization is such as to couple to a non-spherically symmetric polarizability of the object in such a way as to cause the object to rotate in the light field at a rotation frequency that is equal to a rational fraction of the driving frequency; and a measurement unit configured to measure a phase of the rotation of the object relative to the modulation of the polarization to detect an external torque or external force applied to the rotating object, thereby sensing a property of the environment of the rotating object.

The invention will now be further described, by way of example, with reference to the accompanying drawings, which are summarised below.

Figure 1 depicts a sensing apparatus according to an embodiment.
Figure 2 is a graph showing power spectral density (PSD) for frequency unlocked rotation of an object (curve 100 and left hand vertical axis) and PSD for frequency locked rotation of an object (curve 101 and right hand vertical axis).

Figure 3 is a graph showing PSD (gray points) of the frequency-locked rotation at 1.11 MHz, taken over 4 continuous days, fit with a Lorentzian curve (solid line).

Figure 4 is a graph of phase noise against frequency offset for a rotating object. Phase noise of the object is labelled 110 and phase noise of the drive is labelled 112.

Figure 5 is a graph of Allan deviation against averaging time, showing that the mechanical motion (upper dots 114) follows the stability of the drive (lower crosses 116) to within one order of magnitude, leading to a long (4 day) frequency stability for the mechanical rotation of less than one part in $10^{11}$.

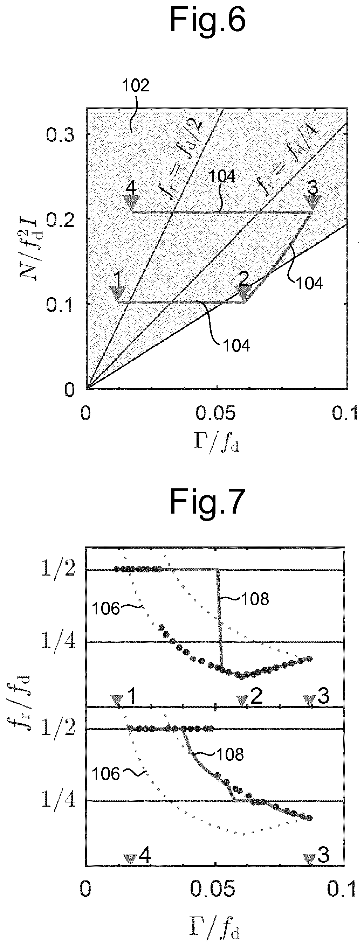

Figure 6 is a graph depicting the reduced parameter space for a periodically driven object. Different regions can exhibit different limit cycles, as determined by the initial conditions. Within the shaded region 102, $f_r : f_d = 1 : 2$ - locking can occur, while it cannot be realized in the non-shaded region. Along the labelled solid lines the frequency of threshold rotation coincides with $1 : 2$ - or $1 : 4$ - locking. To explore the various limit cycles a path in parameter space (solid line 104) was followed experimentally by adiabatically varying the gas pressure $p_g$ and the driving frequency $f_d$.

Figure 7 is a graph showing experimentally observed frequencies $f_r$ along the path in parameter space (heavy points), and simulation (solid line 108). The three different limit cycles observed are: threshold rotation (light broken lines 106), 1:2 - and 1:4 - locking (horizontal solid lines).

Figure 8 is a graph of PSD against frequency showing that at 4mbar the locking frequency $f_d$ can be continuously tuned by over 800 kHz, which corresponds to almost $10^{12}$ linewidths. The peaks in the PSD differ in amplitude because for short recording times they are not fully resolved.

Figure 9 is a graph showing relative phase against pressure. In the parameter region the phase lag between the oscillator and the drive depends linearly on pressure and thus can be used for precise pressure sensing. The error margin (shaded region) in this measurement is set by the resolution and repeatability of the commercial pressure gauge.

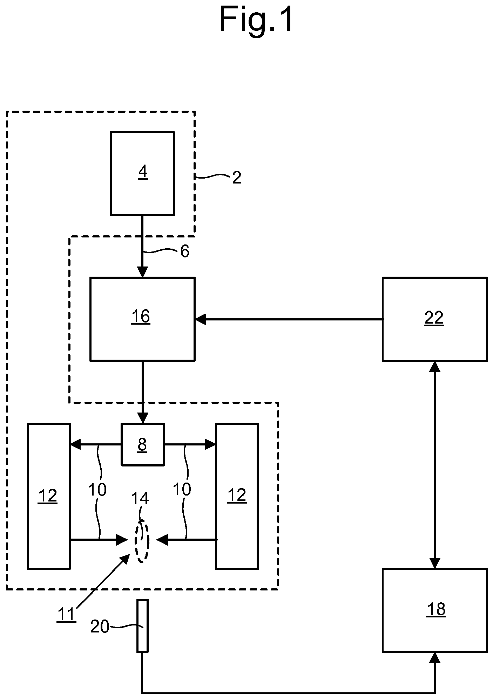

Figure 1 depicts an example sensing apparatus. The sensing apparatus comprises a light field generation unit 2 that generates a light field 11. The light field 11 is suitable for optically levitating an object in the light field. In this particular example the light field 11 is formed by laser beams 10 propagating in opposite directions, but other arrangements are possible. The optical levitation may be achieved by trapping the object at an antinode of a standing wave, formed for example by the laser beams. The nature of the object is not particularly limited, but as explained below will normally be configured to have a non-spherically symmetric polarizability. The object may for example be elongate, for example in the form of a nanocylinder or nanorod. In particular examples described below, the object is a silicon nanorod. The object is normally levitated in a gaseous environment (rather than in a liquid). The gaseous environment may be under partial vacuum (i.e. at a pressure below atmospheric pressure), for example at pressures between 1 bar and 1 mbar.

In the example shown, the light field generation unit 2 comprises a laser 4 that generates a laser beam 6. The laser beam 6 passes through a polarization modulator 16 (described below) before being split by a beam splitter 8 to generate laser beams 10. The laser beams 10 are directed by optics 12 to generate the required light field 11 in a region 14 where the object is to be optically levitated. The laser beams 10 propagate in opposite directions (i.e. are counter-propagating) in the region 14.

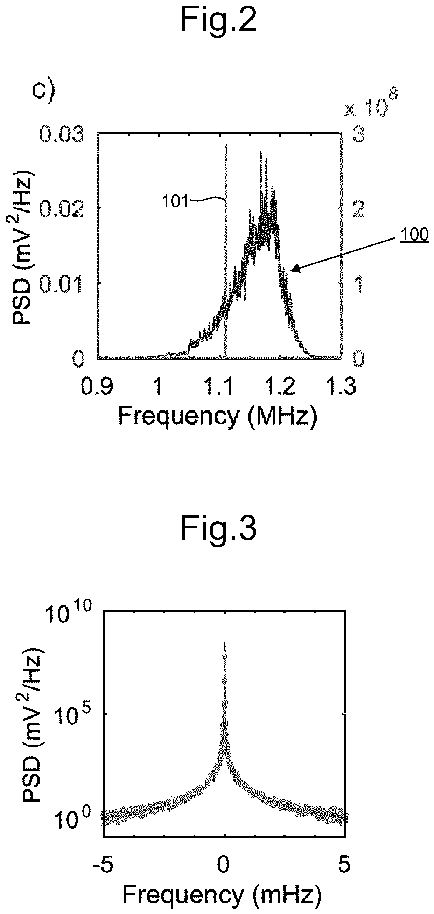

It is known that an optically levitated object can be orientated in a particular direction, or can be made to rotate, by controlling the polarization of the light field at the object (e.g. of the counter-propagating laser beams). For example, where linearly polarized laser beams 10 are used, the object can be harmonically trapped in an antinode of the standing wave and aligned with the field polarization. When circularly polarized laser beams are used, the scattered light exerts a torque and propels the object to rotate in the plane orthogonal to the beam axis, while its centre-of-mass remains trapped. The torque arises due to coupling of the polarization with a non-spherically symmetric polarizability of the object. The non-spherically symmetric polarizability may be provided by the shape of the object (e.g. by non-spherical shapes such as elongate shapes, nanocylinders or nanorods) or by spatial variations in the composition of the object. Example methods are disclosed in Tong, L., Miljkovic, V. D. and Kall, M., "Alignment, Rotation, and Spinning of Single Plasmonic Nanoparticles and Nanowires Using Polarization Dependent Optical Forces." Nano Lett. 10, 268-273 (2009). The maximum rotation frequency of the object is determined by its size, the pressure, and the laser intensity. Collisions with gas particles and centre-of-mass excursions into regions of different light intensity give rise to a broad distribution of rotational frequencies, as shown in curve 100 in Figure 2.

The sensing apparatus further comprises a polarization modulator 16. The polarization modulator 16 modulates the polarization of the light field (e.g. by modulating the polarization of laser beams 10 providing the light field) such that the polarization varies periodically at a driving frequency at the object. Thus, instead of applying a constant polarization (e.g. a constant linear polarization to achieve a stable object orientation, or a constant circular polarization to achieve steady rotation), the nature of the polarization changes with time in a periodic (i.e. regular, repeating) manner. As with the constant polarization case, the modulated polarization is such as to couple to a non-spherically symmetric polarizability of the object. However, contrary to the constant polarization case, the modulated polarization is configured such that the object is caused to rotate in the light field at a rotation frequency that is determined by the driving frequency, for example a rational fraction of the driving frequency. This can be achieved because the torque applied by the modulated polarization (e.g. in the plane perpendicular to the propagating directions of the laser beams 10) is no longer constant, but rather varies periodically at the driving frequency. The periodically varying torque may be provided by periodically varying a degree of ellipticity in the polarization. Ellipticity is a measure of how circularly polarized the light field is. For example, a minimum possible degree of ellipticity occurs when laser beams 10 providing the light field are perfectly linearly polarized and a maximum possible degree of ellipticity occurs when the laser beams 10 are perfectly circularly polarized. Intermediate states, for example where there is a component of linear polarization and a component of circular polarization, may be referred to as elliptically polarized. In general the torque that is applied will be a minimum (zero) for linearly polarization and a maximum for circularly polarization. Intermediate states of ellipticity will provide intermediate sizes of torque.

In an embodiment, the modulated polarization comprises a repeating sequence of a driving period and a non-driving period. The duration of the driving period may be the same as or different from the duration of the non-driving period. During the driving period, the polarization is such that a torque is applied to the object by the light field (e.g. laser beams 10). During the non-driving period, the polarization is such that no torque is applied to the object by the light field (e.g. laser beams 10). As discussed above, this may be achieved by arranging for the polarization to be predominantly circular polarization (e.g. perfectly circular polarization) during the driving period and for the polarization to be predominantly linear polarization (e.g. perfectly linear polarization) during the non-driving period.

The modulation is selected so that rotation of the object locks to a frequency that is dependent on the driving frequency (a rational fraction thereof). This allows ultra-high $Q_m$ rotations to be achieved. The mean rotation frequency $f_r$ becomes independent of pressure or laser power fluctuations. The limitations of collisional damping and even the necessity to work in ultra high vacuum, are thereby overcome. Unprecedentedly high torque sensitivity of sub-zepto Nm at room temperature and millibar pressures has been achieved.

A measurement unit 18 is provided for monitoring motion of the object. In the example shown the measurement unit 18 uses an optical fibre 20 to collect light scattered from the object. The measurement unit 18 measures a phase of the rotation of the object. As will be described below in further detail, the phase is influenced by external torques or external forces applied to the object. The phase therefore yields information about external torques or external forces applied to the object, thereby allowing properties of the environment of the rotating object to be sensed. In the example of Figure 1, the measurement unit 18 uses a lock-in amplifier 22 coupled to the polarization modulator 16 to perform phase-sensitive detection.

In one class of embodiments, the detected external torque or external force comprises a torque or force applied by gas in the region where the object is rotating, the method of sensing thereby sensing a property of the gas. The property of the gas may comprise one or more of the following: pressure of the gas; temperature of the gas; a property of a flow of the gas.

In another class of embodiments, a change in the orientation of the light field, provided for example by a change in the orientation of the sensing apparatus, is detected by measuring a change in the phase of the rotation of the object caused by a change in an external torque or external force applied to the object due to gravity.

In a further class of embodiments, one or more of the following is sensed via the detected external torque or external force: photon absorption or emission by the object; a radiation pressure in a light field applied to the object; an optical potential in a region containing the object; a change in mass of the object; a change in size of the object; a velocity field or turbulence in a gas flow or atomic beam.

The methodology is now described in further detail with reference to a particular example.

*Object trapping*

An object consisting of a silicon nanorod of length $\ell$ = (725 $\pm$ 15)nm and diameter $d$ = (130 $\pm$ 13)nm (with mass $M$ = 1.7 x 10$^{-16}$kg) was trapped at a pressure of $p_g$ = 4mbar, using light of total power $P$ =1:35W with RMS power fluctuations of 0.3% ($\lambda$ = 1550nm). Further details of methods suitable to produce and trap such nanorods are provided in the following references: 1) Kuhn, S. et al., "Full Rotational Control of Levitated Silicon Nanorods." arXiv:1608.07315 (2016); and 2) Kuhn, S. et al., "Cavity-Assisted Manipulation of Freely Rotating Silicon Nanorods in High Vacuum." Nano Lett. 15, 56045608 (2015).

The motion was monitored by placing a 1mm core multimode fibre 20 less than 100$\mu$m from the trapped nanorod, which collects the light that the nanoparticle scatters, yielding information about all translational and rotational degrees of freedom.

*Oscillation analysis*

In order to record a time series as long as 4 days the scattered light was mixed down with a local oscillator at frequency $f_{LO}$ such that the rotational motion signal of the object was shifted to a frequency of 190Hz and digitized with a sampling rate of 2kS/s. This signal can then be used to calculate the Allan deviation and the phase noise $S_{\emptyset}(f)$ = $10\log_{10}[PSD(f)/PSD(f_d)]$ in units of dBc/Hz. The drive signal is recorded and analysed in the same way. To extract the relative phase of the object rotation with respect to the drive a Stanford Research Systems lock-in amplifier (SR830) 22 was used, which performs a homodyne measurement on the mixed-down 190Hz scattering signal. For this purpose both the driving frequency $f_d$ of the modulation and the local oscillator $f_{LO}$ are synced to a common clock.

*Rotational dynamics*

The rotational motion depends crucially on the damping rate $\Gamma$, the radiation torque $N$, and the laser potential $V$, through Eq. (1) (see below). All three quantities can be evaluated microscopically. Specifically, the rotational damping rate due to diffuse reflection of gas atoms with mass $m_g$, evaluated in the free molecular regime, is

$\Gamma = d\ell p_g\sqrt{2\pi m_g}\,(6 + \pi)/8M\sqrt{\kappa_B T}$, where $T$ denotes the gas temperature. The optical torque exerted by a circularly polarized standing wave can be evaluated by approximating the internal polarization field according to the generalized Rayleigh-Gans approximation as $N = P\Delta\chi\ell^2 d^4 k^3 [\Delta\chi\eta_1(k\ell) + \chi_\perp\eta_2(k\ell)]/48cw_0^2$, where $k = 2\pi/\lambda$ is the wavenumber, $\Delta\chi = \chi_\parallel - \chi_\perp$ depends on the two independent components of the susceptibility tensor and $\eta_1(k\ell)$ = 0.872 and $\eta_2(k\ell)$ = 0.113 (these values being applicable for one particular experiment performed by the inventors). In a similar fashion, one obtains for the laser potential $V = Pd^2\ell\Delta\chi/2cw_0^2$.

*Results and discussion*

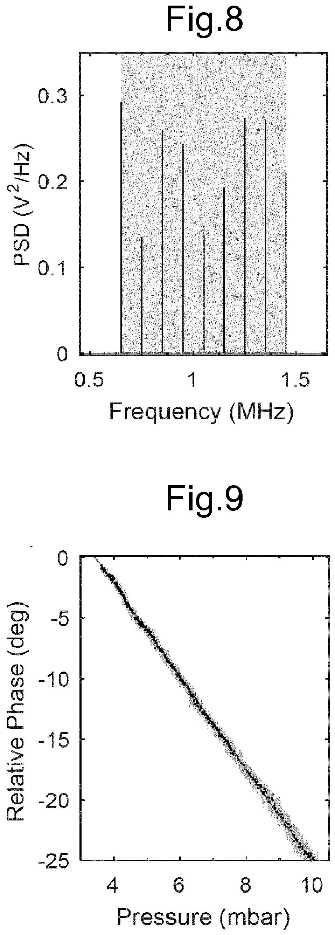

The object was driven to rotate by periodically switching the laser polarization between linear and circular polarization. The object was found to frequency-lock to the modulation, leading to a sharp peak in the power spectral density (PSD) of the scattered light, as shown in Figure 3. The locked rotation peak is eleven orders of magnitude narrower than in the unlocked case (see curve 100 in Figure 2) and when locked, the frequency can be continuously tuned over a range of $10^{12}$ linewidths (as shown in Figure 8).

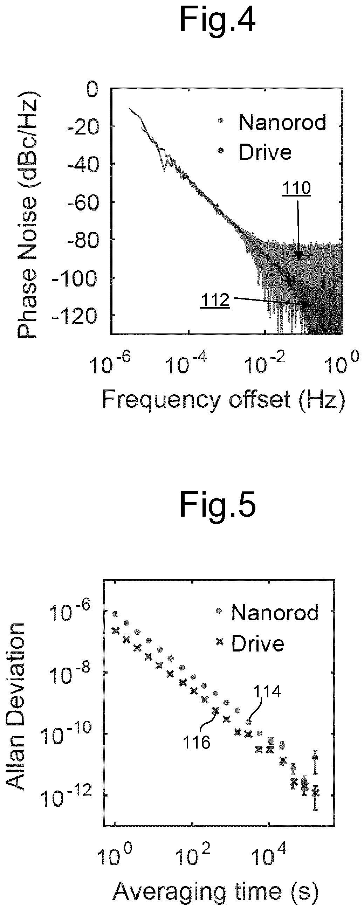

In this example, in order to characterize the frequency-locked rotation, the object was driven with a driving frequency $f_d$ = 1.11 MHz at a gas pressure $p_g$ = 4mbar, and total laser power $P$ = 1.35 W. The object's motion was recorded continuously for four days, as described above. The PSD of the locked rotation is shown in Figure 3. An extremely narrow feature is recorded, which, when fit with a Lorentzian, yields a FWHM below 1.3 µHz within one standard deviation. This gives an effective $Q_m = f_d/\Delta_{fr}$ of 7.7 $\times$ $10^{11}$, the highest value ever recorded for a mechanical system. In this way we achieve ultra-high stability rotations. The phase noise reaches - 80 dBc/Hz at only 3mHz from the carrier frequency (Figure 4), and the Allan deviation shows that after four days of recording the relative frequency fluctuations are below one part in $10^{11}$, which is almost as stable as the drive itself (Figure 5).

To explain this ultra-stable rotation, dynamics of the rod's orientation $\alpha$ with respect to the polarization axis are modelled. Denoting by $\Gamma$ the damping rate due to gas collisions (a function of gas pressure $p_g$), by $N$ the torque exerted by the circularly polarized standing wave (a function of laser power $P$) and by $V$ the maximum potential energy of the rod in a linearly polarized standing wave, the equation of motion is

$$\ddot{\alpha} = -\Gamma\dot{\alpha} + \frac{N}{I}h(t) - \frac{V}{I}\sin(2\alpha)\,[1 - h(t)], \qquad (1)$$

where $I = M\ell^2 / 12$ is the moment of inertia and $h(t)$ represents the periodic driving, with $h(t) = 1$ for circular polarization at $t \in [0, 1/2f_d]$ and $h(t) = 0$ for linear polarization at $t \in [1/2f_d, 1/f_d]$; expressions for $\Gamma$, $N$ and $V$ are given above.

In the limit of long driving times $t \gg 1/f_d$ the object (e.g. nanorod) rotates with constant mean rotation frequency $f_r = \langle\dot{\alpha}\rangle/2\pi$, and its motion approaches one of two qualitatively distinct types of limit cycle. In the first type, *threshold rotation,* $f_r = N/(4\pi I\Gamma)$ is determined by the balance between $\Gamma$ and the time averaged radiation torque $N/2$. Threshold rotation exhibits a broad frequency distribution, as shown by the curve 100 in Figure 2, due to its dependence on $P$ and $p_g$.

In the second type of limit cycle, the aforementioned *locked rotation,* $f_r$ locks to a rational faction of the driving frequency. Experimentally, we observe $f_r : f_d$ = 1 : 2 - and $f_r : f_d$ = 1 : 4 - locking, where the object performs one rotation in two or four driving periods, respectively. The rotational frequency $f_r$ now *does not* depend on environmental parameters such as $p_g$ or $P$, but only on the frequency stability of the drive. This makes it possible to achieve an exceptionally high rotational frequency stability.

The realized limit cycle is determined by the initial dynamics of the object, and by experimental parameters such as $p_g$, $P$, $f_d$, and the object dimensions. For a given object the ratio between torque and potential is fixed, and thus Eq. (1) depends only on the dimensionless damping rate $\Gamma/f_d$ and dimensionless torque $N/f_d^2 I$. Figure 6 shows this reduced parameter space. The shaded area 102 indicates the region where 1 : 2 - locking is possible. The labelled solid lines indicate where threshold and locked rotations have the same frequency, and locking occurs independent of the initial conditions.

To explore the dynamics of the driven object, $p_g$ and $f_d$ were varied experimentally, thereby following a path through parameter space (lines 104 in Figure 6). Observations are shown as heavy points in Figure 7, the top panel showing the path 1-2-3, and the lower panel 3-4. This plot shows that for certain parameters both types of limit cycles can be observed, depending on the initial conditions. When starting from 1, the rotation 1 : 2 - locks to the drive (horizontal solid line). When increasing $p_g$ along 1-2, the object jumps out of lock, and exhibits threshold rotation. When decreasing $f_d$ along 2-3, the object remains at threshold rotation, following the theoretically expected frequencies with excellent agreement (light dotted lines 106). Decreasing $p_g$ along 3-4, the object first follows the threshold rotation frequency until it crosses the horizontal line, where it briefly enters 1 : 4 - locked rotation, returns to threshold rotation and eventually jumps into 1 : 2 - locked rotation. The solid lines 108 in Figure 7 are the theoretically predicted $f_r$ for an adiabatic path through parameter space, with the discrepancy due to imperfect adiabatic control in the experiment. For 1 : 2 - locked rotation, the phase lag between the drive and the rotation is

$$\phi = \arccos\left[\frac{\pi}{2V}(N - 2\pi f_d I\Gamma)\right] \qquad (2)$$

The phase $\phi$ depends upon gas pressure $p_g$ through $\Gamma$ and on laser power $P$ through $V$ and $N$. The requirement that this phase is real defines the shaded region 102 in Figure 6. The phase $\phi$ can be monitored using a lock-in amplifier. For a constant laser power $P$, measuring the phase amounts to local sensing of the gas pressure $p_g$, as shown in Figure 9. In this example a relative pressure sensitivity of 0.3% is achieved, limited only by the intensity noise of the fibre amplifier. This sensitivity may be improved by five to six orders of magnitude by stabilizing the power. A highly sensitive pressure measurement can thus be obtained. The fine spatial resolution provided by the small size of the object (e.g. micrometer-sized) allows, for instance, mapping of velocity fields and turbulences in rarefied gas flows or atomic beams with high spatial accuracy.

The driven object is sensitive to any externally applied torques through Eq. (1). From Eq. (2), the torque sensitivity can be estimated as 2.4 $x$ $10^{-22}$Nm for the parameters used in a particular tested example, which at room temperature is already the highest value ever achieved to the inventors' knowledge, and can be significantly improved by laser power stabilization.

A great advantage of the driven nanorotor over other high $Q_m$ systems is the absence of an intrinsic resonance frequency. By varying $f_d$ we can tune the frequency at ultra-high $Q_m$ over almost $10^{12}$ linewidths, as shown in Figure 8. This feature makes the approach highly attractive for local force sensing, since in general a high $Q_m$ naturally comes with the cost of a low bandwidth. Measuring the phase lag rather than the frequency shift allows us to monitor force variations in real time. It is thus possible to circumvent a major limitation of typical alternative high $Q_m$ force sensors, whose measurement time grows inherently with $Q_m$.

In conclusion, the inventors have demonstrated that polarization modulation in a standing light wave can be used propel a levitated nanomechanical rotor (object) at low pressures. For a wide range of experimental parameters the kicked rotor is attracted to a stable limit cycle, where the rotation frequency is locked to the external drive. When locked, the rotational frequency noise is independent of gas pressure or laser power fluctuations. This leads to a record mechanical quality factor and can be used for instantaneous, highly sensitive local measurements of pressure or torque. For instance, the current setup allows for detection of non-conservative forces due to photon absorption or emission, shear forces in gas flows, radiation pressures in light fields, optical potentials, mass and size variations of the rod due to gas accommodation, and local pressure and temperature variations in the gas. Since there is no fixed resonance frequency, the rotational frequency can be tuned over a range of almost $10^{12}$ linewidths by setting the drive frequency. Employing higher optical powers, larger duty cycles of the drive, or lower gas pressures will further increase this sensing range by a factor of more than ten, while retaining its exquisite sensitivity. By reaching ultra high vacuum this technique may also be suited to prepare quantum coherent rotational dynamics for which the unprecedentedly high $Q_m f_r$ product may be exploited.

**Claims**

1. A method of sensing, comprising:

   optically levitating an object in a light field;
   modulating the polarization of the light field such that the polarization varies periodically at a driving frequency, wherein the polarization couples to a non-spherically symmetric polarizability of the object in such a way as to cause the object to rotate in the light field at a rotation frequency that is equal to a rational fraction of the driving frequency; and
   measuring a phase of the rotation of the object relative to the modulation of the polarization to detect an external torque or external force applied to the rotating object, thereby sensing a property of the environment of the rotating object.

2. The method of claim 1, wherein the modulated polarization is such as to apply a periodically varying torque to the object.

3. The method of claim 2, wherein the periodically varying torque is provided by a periodically varying degree of ellipticity in the polarization.

4. The method of any preceding claim, wherein the modulated polarization comprises a repeating sequence of a driving period in which the polarization is such that a torque is applied to the object by the light field and a non-driving period in which the polarization is such that no torque is applied to the object by the light field.

5. The method of claim 4, wherein:

   the polarization is predominantly circular polarization during the driving period; and/or
   the polarization is predominantly linear polarization during the non-driving period.

6. The method of any preceding claim, wherein the object is trapped in an antinode of a standing wave of the light field.

7. The method of any preceding claim, wherein the light field is at least partially provided by laser beams propagating in opposite directions.

8. The method of any preceding claim, wherein the detected external torque or external force comprises a torque or force applied by gas in the region where the object is rotating, the method of sensing thereby sensing a property of the gas, wherein the property of the gas preferably comprises one or more of the following: pressure of the gas; temperature of the gas; a property of a flow of the gas.

9. The method of any preceding claim, wherein a change in the orientation of the light field, provided for example by a change in the orientation of apparatus for providing the light field, is detected by measuring a change in the phase of the rotation of the object caused by a change in an external torque or external force applied to the object due to gravity.

10. The method of any preceding claim, wherein one or more of the following is sensed via the detected external torque or external force: photon absorption or emission by the object; a radiation pressure in a light field applied to the object; an optical potential in a region containing the object; a change in mass of the object; a change in size of the object; a velocity field or turbulence in a gas flow or atomic beam.

11. The method of any preceding claim, wherein the rotation of the object comprises rotation in a plane perpendicular to the propagating directions of laser beams forming the light field.

12. The method of any preceding claim, wherein the object is levitated in a gaseous environment.

13. The method of any preceding claim, wherein the non-spherically symmetric polarizability is at least partially provided by:

   the shape of the object, the object preferably comprising a nanocylinder, preferably a semiconducting nanocylinder such as a silicon nanocylinder; and/or

arranging for the object to have a non-uniform composition.

14. The method of any preceding claim, wherein the rational fraction of the driving frequency is 1/2 or 1/4.

15. A sensing apparatus, comprising:

a light field generation unit configured to generate a light field suitable for levitating an object;
a polarization modulator configured to modulate the polarization of the light field such that the polarization varies periodically at a driving frequency, wherein the polarization is such as to couple to a non-spherically symmetric polarizability of the object in such a way as to cause the object to rotate in the light field at a rotation frequency that is equal to a rational fraction of the driving frequency; and
a measurement unit configured to measure a phase of the rotation of the object relative to the modulation of the polarization to detect an external torque or external force applied to the rotating object, thereby sensing a property of the environment of the rotating object.

# Fig.1

# Fig.2

# Fig.3

# Fig.4

# Fig.5

# Fig.6

# Fig.7

# Fig.8

# Fig.9

Europäisches
Patentamt

European
Patent Office

Office européen
des brevets

# EUROPEAN SEARCH REPORT

Application Number

EP 17 15 7211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | LIANMING TONG ET AL: "Alignment, Rotation, and Spinning of Single Plasmonic Nanoparticles and Nanowires Using Polarization Dependent Optical Forces", NANO LETTERS, vol. 10, no. 1, 13 January 2010 (2010-01-13), pages 268-273, XP055400300, US ISSN: 1530-6984, DOI: 10.1021/nl9034434 * paragraph [0002]; figure 4 * * page 269, left-hand column, paragraph [0002] * * page 271, paragraph 2 - page 272, paragraph 1 * | 1-15 | INV. G01L3/00 ADD. B82Y15/00 B82Y20/00 G01L11/02 |
| Y,D | STEFAN KUHN ET AL: "Full Rotational Control of Levitated Silicon Nanorods", ARXIV.ORG, CORNELL UNIVERSITY LIBRARY, 201 OLIN LIBRARY CORNELL UNIVERSITY ITHACA, NY 14853, 25 August 2016 (2016-08-25), XP080722587, * abstract * * figure 2 * | 1-15 | |
| A | YOSHIHIKO ARITA ET AL: "Laser-induced rotation and cooling of a trapped microgyroscope in vacuum", NATURE COMMUNICATIONS, vol. 4, 28 August 2013 (2013-08-28), XP055400297, DOI: 10.1038/ncomms3374 | 1-15 | |

TECHNICAL FIELDS
SEARCHED    (IPC)

G01L
B82Y

-/--

The present search report has been drawn up for all claims

| Place of search | Date of completion of the search | Examiner |
|---|---|---|
| The Hague | 29 August 2017 | Verbandt, Yves |

EPO FORM 1503 03.82 (P04C01)

page 1 of 2

Europäisches
Patentamt

European
Patent Office

Office européen
des brevets

## EUROPEAN SEARCH REPORT

Application Number

EP 17 15 7211

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHI H ET AL: "Optomechanics based on angular momentum exchange between light and matter", JOURNAL OF PHYSICS B, ATOMIC MOLECULAR AND OPTICAL PHYSICS, INSTITUTE OF PHYSICS PUBLISHING, BRISTOL, GB, vol. 49, no. 15, 30 June 2016 (2016-06-30), page 153001, XP020307486, ISSN: 0953-4075, DOI: 10.1088/0953-4075/49/15/153001 [retrieved on 2016-06-30] ----- | 1-15 | |
| A | BENJAMIN A STICKLER ET AL: "Ro-Translational Cavity Cooling of Dielectric Rods and Disks", ARXIV.ORG, CORNELL UNIVERSITY LIBRARY, 201 OLIN LIBRARY CORNELL UNIVERSITY ITHACA, NY 14853, 18 May 2016 (2016-05-18), XP080702001, ----- | 1-15 | |
| A | CHEN Q ET AL: "Polarization modulation in optoelectronic generation and detection of terahertz beams", APPLIED PHYSICS LETTERS, A I P PUBLISHING LLC, US, vol. 74, no. 23, 7 June 1999 (1999-06-07), pages 3435-3437, XP012022844, ISSN: 0003-6951, DOI: 10.1063/1.124119 ----- | 1-15 | TECHNICAL FIELDS SEARCHED (IPC) |

The present search report has been drawn up for all claims

| Place of search | Date of completion of the search | Examiner |
|---|---|---|
| The Hague | 29 August 2017 | Verbandt, Yves |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NORTE, R. A. ; MOURA, J. P. ; GROBLACHER, S.** Mechanical Resonators for Quantum Optomechanics Experiments at Room Temperature. *Phys. Rev Lett.,* 2016, vol. 116, 147202
- **TSATURYAN, Y ; BARG, A. ; POLZIK, E. S. ; SCHLIESSER, A.** *Ultra-coherent nanomechanical resonators via soft clamping and dissipation dilution,* 2016, vol. arXiv
- **HOSSEIN-ZADEH, M. ; VAHALA, K. J.** Observation of injection locking in an optomechanical rf oscillator. *Appl. Phys. Lett.,* 2008, vol. 93, 191115
- **VILLANUEVA, L. G. et al.** A Nanoscale Parametric Feedback Oscillator. *Nano Lett.,* 2011, vol. 11, 50545059
- **KUHN, S. et al.** *Full Rotational Control of Levitated Silicon Nanorods,* 2016, vol. arXiv
- **TONG, L. ; MILJKOVIC, V. D. ; KALL, M.** Alignment, Rotation, and Spinning of Single Plasmonic Nanoparticles and Nanowires Using Polarization Dependent Optical Forces. *Nano Lett.,* 2009, vol. 10, 268-273
- **KUHN, S. et al.** Cavity-Assisted Manipulation of Freely Rotating Silicon Nanorods in High Vacuum. *Nano Lett.,* 2015, vol. 15, 56045608